# EUROPÄISCHE PATENTSCHRIFT

(11) **EP 0 772 152 B1**
(45) Veröffentlichungstag und Bekanntmachung des Hinweises auf die Patenterteilung: **18.12.2002**
(21) Anmeldenummer: 96115343.4
(22) Anmeldetag: 25.09.1996
(51) Int. Cl.: G06K 19/077, H01L 23/498, G06K 19/04, G09F 3/18

(54) **Chipträger aus Kunststoff**
Plastic chip carrier
Support de composant en matière plastique

(30) Priorität: 31.10.1995 DE 19540595
(43) Veröffentlichungstag der Anmeldung: 07.05.1997
(73) Patentinhaber: Messer Griesheim GmbH, 65933 Frankfurt am Main (DE)
(72) Erfinder: Landen, Guido, 40670 Meerbusch (DE)

(56) Entgegenhaltungen:
- EP-A- 0 565 022
- DE-A- 4 409 313
- DE-U- 8 712 155
- FR-A- 2 689 663
- GB-A- 2 129 594
- US-A- 5 029 550

## Beschreibung

Die Erfindung betrifft einen Chipträger aus Kunststoff mit einem mit dem Chipträger unlösbar verclipsbaren Deckel nach dem Oberbegriff des Anspruches 1.

Systeme mit elektronischen Datenträgern zur maschinenlesbaren Identifikation von Gasflaschen sind bekannt. Die DE 44 09 313 A1 zeigt eine Vorrichtung für die Aufnahme derartiger elektronischer Datenträger. Die Datenträger sind in der Regel in Form eines Chips ausgebildet, meistens scheibenförmig oder zylindrig. Die Chipträger mit der zugehörigen Befestigungsvorrichtung sind, wie die DE 44 09 313 A1 zeigt, jeweils nur für ganz bestimmte Behälter verwendbar, beispielsweise für Gasflaschen bestimmter Größe. Dies ist im wesentlichen dadurch bedingt, daß die Chipträger unlösbar am Behälter angebracht werden müssen. Unlösbar heißt hierbei, daß die Chipträger nur durch Zerstörung vom Behälter wieder entfernt werden können, allenfalls nur durch Einsatz eines Spezialwerkzeuges. Weitere Forderungen, die an derartige Chipträger gestellt werden, sind, daß sie ohne Hilfswerkzeuge schnell und einfach zu montieren sind, daß sie witterungsbeständig sind und auf jeden Fall diebstahl- und manipulationssicher sind.

Da die Chipträger mit ihren Befestigungsvorrichtungen jeweils für ganz bestimmte Behälter konzipiert werden müssen, ist ihre Herstellung wegen der dadurch bedingten relativ geringen Stückzahl teuer.

Der Erfindung liegt daher die Aufgabe zugrunde, einen Chipträger zu schaffen, der universell an Behältern unterschiedlicher geometrischer Abmessungen befestigt werden kann, der dadurch preiswerter in der Herstellung ist, einfach in der Handhabung und bei dem allenfalls nur einzelne Elemente des gesamten Chipträgers an die jeweiligen Behältertypen angepaßt werden müssen.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Gemäß der Erfindung werden demnach nur an einem Teil des Chipträgers, nämlich an dessen Boden, Mittel angeformt, mit denen der Chipträger an Behältern unterschiedlicher geometrischer Abmessungen unlösbar befestigt werden kann, wobei die Mittel auf wenige Grundtypen beschränkt werden, die das universelle Anbringen des Chipträgers an zumindest einer bestimmten Kategorie von Behältern ermöglicht. Der jeweilige Chipträger mit seiner angeformten Befestigungsvorrichtung ist demnach nicht mehr für einen speziellen Behälter, beispielsweise eine Gasflasche bestimmter Größe, einsetzbar, sondern kann entweder bei Gasflaschen verschiedener Größe oder bei beliebigen anderen Behältern, beispielsweise auch Paletten und Flaschenbündeln, eingesetzt werden. Dadurch werden dem System zur maschinenlesbaren Identifikation von Behältern und ihres Inhaltes mittels elektronischer Datenträger neue Anwendungsgebiete erschlossen, ohne daß hierfür teure spezielle Neukonstruktionen erforderlich wären.

Es gibt drei Grundtypen an angeformten Mitteln zur Befestigung. Es handelt sich hierbei um offene Kunststoffringe zur Anbringung an Gasflaschen, um Kabelbinder zum Befestigen an unterschiedlichsten Behältern oder Gegenständen und um Spreitzdome zum Befestigen an Behälterwänden oder entsprechenden Konstruktionsteilen.

Die Zeichnungen, Figuren 1-9, veranschaulichen Ausführungsbeispiele der Erfindung.

Es zeigen:
- Figur 1: Den Boden eines Chipträgers,
- Figur 2: einen Chip,
- Figur 3: den Deckel eines Chipträgers,
- Figur 4: den Chipträger gemäß den Figuren 1 bis 3 in zusammengeclipstem Zustand,
- Figur 5: einen Chipträger mit angeformten Ring,
- Figur 6: eine Draufsicht auf Figur 5,
- Figur 7: eine andere Ausführungsform eines Chipträgers mit angeformten Ring,
- Figur 8: eine Draufsicht auf Figur 7,
- Figur 9: einen Schnitt durch den Chipträger von Figur 7,
- Figur 10: einen Chipträger mit Kabelbinder,
- Figur 11: einen Schnitt entlang der Linie A-A in Figur 10,
- Figur 12: einen Chipträger mit Spreitzdorn in eingebautem Zustand,
- Figur 13: einen Sicherungsstift zur Sicherung des Spreitzdorns gemäß Figur 12,
- Figur 14: die Ansicht B-B von Figur 13,
- Figur 15: die Ausführungsform von den Figuren 12 und 13 in eingebautem Zustand.

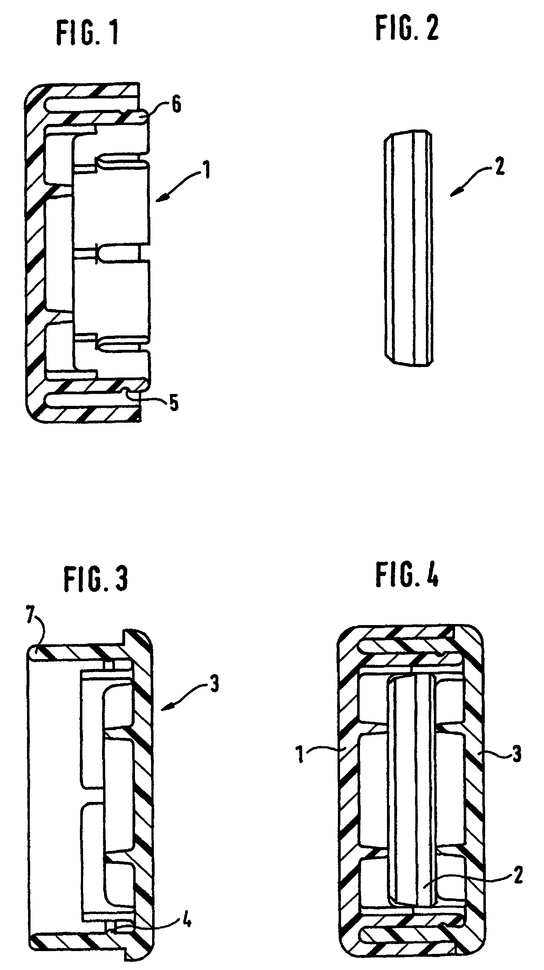

Figur 1 zeigt den Boden 1 eines Chipträgers, Figur 2 den zugehörigen Chip und Figur 3 den zugehörigen Deckel. Boden 1 und Deckel 3 sind in ihrer geometrischen Form dem Chip angepaßt, hier einem scheibenförmigen Chip. Der Boden 1 und der Deckel 3 sind mit umlaufenden Stegen 6 und 7 versehen, welche Erhebungen 4 bzw. Vertiefungen 5 aufweisen. Beim Zusammenschieben von Boden 1 und Deckel 3 verrasten die Erhebung 4 und die Vertiefung 5 wodurch ein unlösbarer Verschluß gebildet wird, d.h. der Chipträger kann nur mit Gewalt und durch Zerstörung wieder geöffnet werden. Figur 4 zeigt den Chipträger in zusammengebautem Zustand.

Erfindungsgemäß sind an den Boden 1 des Chipträgers Mittel zur unlösbaren Befestigung des Chipträgers an Behältern unterschiedlicher geometrischer Abmessung angeformt. Bei allen Varianten bleibt jedoch der Deckel 3 unverändert, der somit als Universaldeckel ausgebildet ist. Hierdurch werden die Herstellungskosten gesenkt. Auch der Boden 1 bleibt im Prinzip unverändert, so daß das Formwerkzeug nur teilweise an die spezifischen Befestigungsmittel angepaßt werden muß.

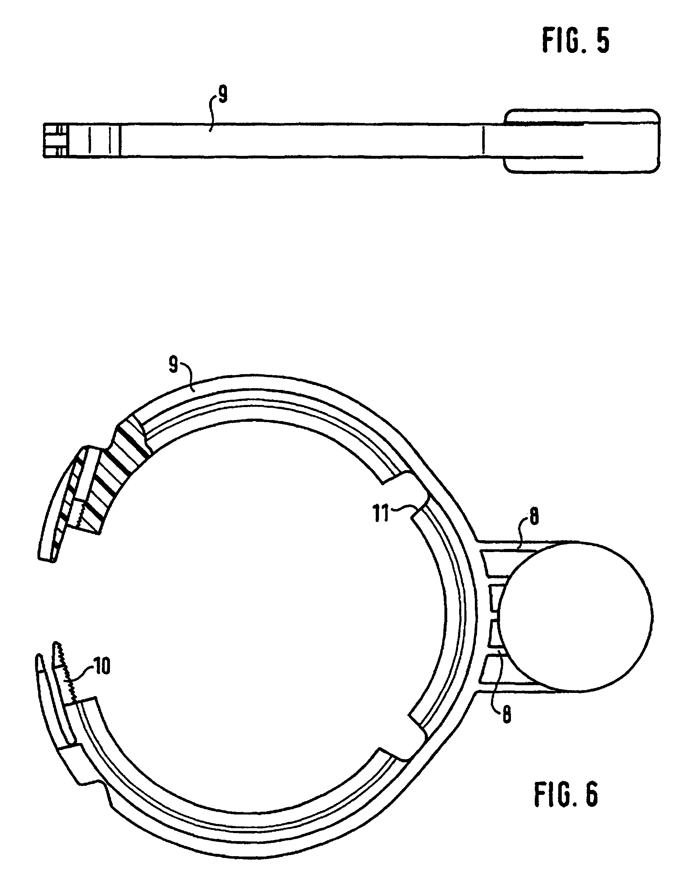

Die Figuren 5 und 6 zeigen eine Ausführungsform, bei der ein Kunststoffring 9 über Stege 8 an den Chipträger angeformt ist. Diese Ausführungsform ist besonders für Gasflaschen geeignet Der Kunststoffring 9 erhält ein Profil, welches es ermöglicht, den Kunststoffring 9 unterhalb des Flaschenkappengewindes anzuordnen. Der Kunststoffring 9 ist an einer Stelle offen, die durch eine Verzahnung 10 mit innenliegender Nut und Feder geschlossen werden kann. Durch die Verzahnung können Durchmessertoleranzen ausgeglichen werden, der Verschluß selbst ist diebstahl- und manipulationssicher. Die Anpassung an Durchmessertoleranzen und in gewissem Umfang an unterschiedliche Durchmesser wird durch die Ausnehmungen 11 erleichtert.

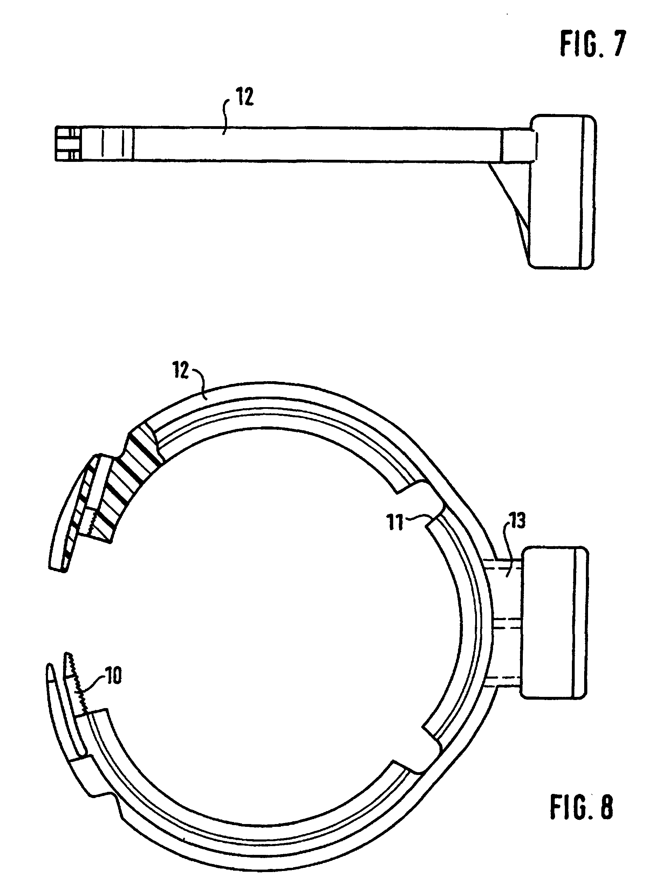

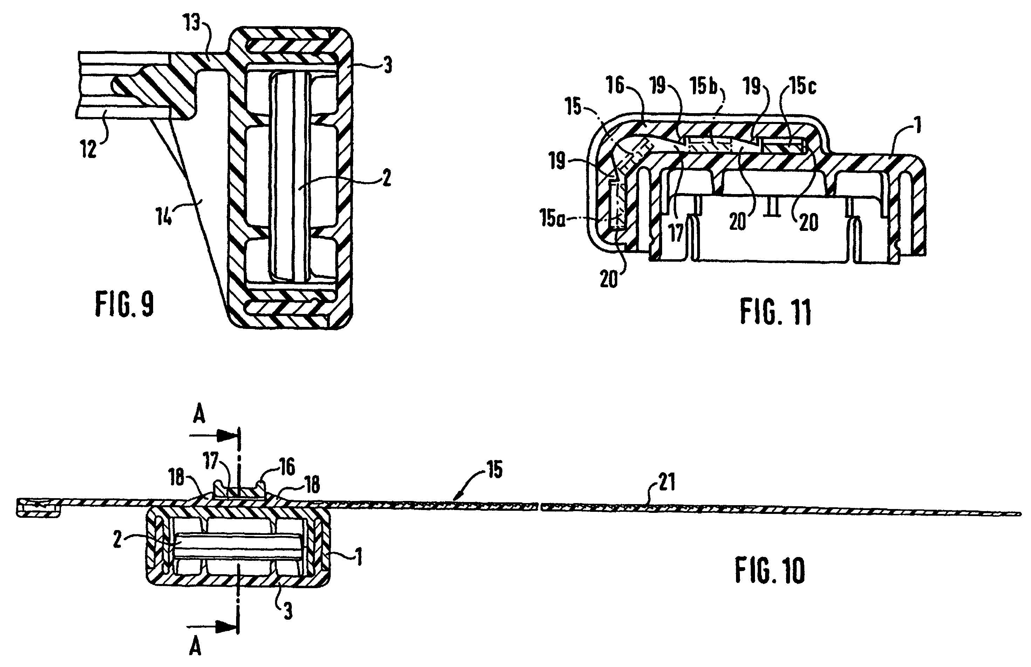

Die Figuren 7 bis 9 zeigen eine ähnliche Ausbildung wie die Vorrichtung nach den Figuren 5 und 6, unterschiedlich ist die um 90° verkantete Anordnung des Chipträgers. Hierbei ist der Kunststoffring 12 über Stege 13 und Rippen 14 mit dem Chipträger verbunden. Die übrigen Merkmale entsprechen denen der Ausführungsform nach den Figuren 5 und 6. In Figur 9 ist im Schnitt das Profil des Kunststoffringes 12 zu sehen.

Die Figuren 10 und 11 zeigen eine Ausführungsform, bei welcher an den Boden 1 eine Schiene 16 angeformt ist, welche mit dem Boden 1 einen Spalt 17 bildet. In dem Spalt 17 ist ein Kabelbinder 15 angeordnet, welcher durch Verdickungen 18 unverrückbar in Spalt 17 fixiert ist. Der Spalt 17 ist durch mehrere keilförmige Vorsprünge 19 in mehrere Führungsschlitze 20 unterteilt. Die Führungsschiene 16 umfaßt den Boden 1 unter Ausbildung eines rechten Winkels. An dieser Stelle kann der Kabelbinder 15 mit den Verdickungen 18 in den Spalt 17 eingeführt werden und durch Verschieben in einen der Führungsschlitze 20 unverrückbar positioniert werden (Positionen 15a, 15b und 15c). Hierdurch ergeben sich verschiedene Möglichkeiten, den Chipträger 1 mit dem Kabelbinder 15 zu verbinden. Durch die flachliegende Verzahnung 21 des Kabelbinders 15 paßt sich der Kabelbinder der Form des Behälters an. Dies können zum Beispiel Kleinflaschen ohne Halsring mit unterschiedlichen Durchmessern sein. Der Überhang des Kabelbinders wird hierbei abgeschnitten. Der Kabelbinder wird unlösbar verschlossen.

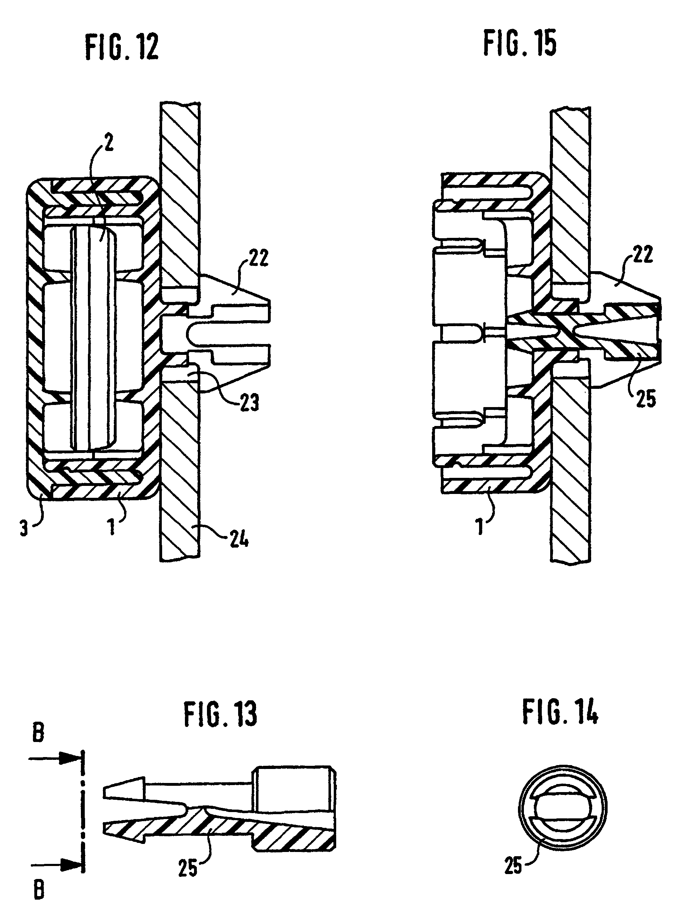

Die Figuren 12 bis 15 zeigen eine Ausführungsform, bei welcher der Chipträger mittels einen Spreitzdorns 22 durch ein Loch 23 in eine Behälterwand 24 einclipsbar ist. Bei der Behälterwand 24 muß es sich nicht unbedingt um die Wand eines geschlossenen Behälters handeln sondern es kann zum Beispiel auch die Strebe einer Palette sein. Der Spreitzdom 22 ist an den Boden 1 angeformt. Falls es erforderlich ist, kann der Spreitzdom 22 zusätzlich durch den in den Figuren 13 und 14 dargestellten Sicherungsstift 25 gesichert werden, indem der Sicherungsstift 25 in die Öffnung des Spreitzdorns 22 eingedrückt wird. Figur 15 zeigt einen derartigen Zusammenbau von Spreitzdom 22 und Sicherungsstift 25. Eine Anpassung an verschiedene Wandstärken der Behälterwand 24 ist möglich durch einen Wechseleinsatz. Hierdurch kann der Chipträger mit dieser Ausführungsform an Paletten, Bündeln und Blechkonstruktionen auch unterschiedlicher Wandstärke angebracht werden. Demgemäß kann er kostengünstig in großen Stückzahlen gefertigt werden.

## Patentansprüche

1. Chipträger aus Kunststoff mit einem mit dem Chipträger unlösbar verclipsbaren Deckel und einem an den Chipträger angeformten Kunststoffring (9) zur unlösbaren Befestigung des Chipträgers an einen Behälter, **dadurch gekennzeichnet, daß** der Kunststoffring (9) ein im Durchmesser verstellbarer, am Umfang an einer Stelle offener Kunststoffring (9) mit Ausnehmungen (11) an der Innenseite ist, dessen Öffnung durch eine Verzahnung (10) mit innenliegender Nut und Feder unlösbar verschließbar ist.

2. Chipträger nach Anspruch 1, **dadurch gekennzeichnet, daß** der Behälter eine Gasflasche, eine Palette oder ein Flaschenbündel ist.

3. Chipträger nach Anspruch 1, **dadurch gekennzeichnet, daß** der Kunststoffring (9) zur unlösbaren Befestigung des Chipträgers an eine Gasflasche dient und über mindestens einen Steg (8) mit dem Chipträger verbundenen ist.

## Claims

1. Plastic chip carrier with a cover which can be undetachably clipped onto the chip carrier and a plastic ring (9) integrally formed on the chip carrier for undetachably fastening the chip carrier to a container, **characterized in that** the plastic ring (9) is a plastic ring (9) which can be adjusted in diameter, is open at one point on the circumference, has clearances (11) on the inner side and the opening of which can be unreleasably closed by a serration (10) with an inner tongue and groove.

2. Chip carrier according to Claim 1, **characterized in that** the container is a gas cylinder, a pallet or a cluster of cylinders.

3. Chip carrier according to Claim 1, **characterized in that** the plastic ring (9) serves for undetachably fastening the chip carrier to a gas cylinder and is connected to the chip carrier via at least one web (8).

## Revendications

1. Support de composant en matière plastique comportant un couvercle enclipsable de manière solidaire au support de composant et un anneau en matière plastique (9) formé sur le support de composant pour fixer de manière imperdable le support de composant sur un récipient.
**caractérisé en ce que**
l'anneau de matière plastique (9) est un anneau en matière plastique (9) de diamètre réglable, ouvert à un certain endroit en périphérie, et ayant des cavités (11) à l'intérieur dont l'ouverture est fermée de manière imperdable par une denture (10) avec une rainure et un ressort intérieur.

2. Support de composant selon la revendication 1,
**caractérisé en ce que**
le récipient est une bouteille de gaz, une palette ou une faisceau de bouteilles.

3. Porteur de composant selon la revendication 1,
**caractérisé en ce que**
l'anneau en matière plastique (9) sert de fixation imperdable du support à une bouteille de gaz et est relié par au moins une entretoise (8) au support de composant.
